# EUROPÄISCHE PATENTSCHRIFT

(11) **EP 1 273 588 B1**
(45) Veröffentlichungstag und Bekanntmachung des Hinweises auf die Patenterteilung: **11.08.2004**
(21) Anmeldenummer: 02012677.7
(22) Anmeldetag: 07.06.2002
(51) Int. Cl.: C07F 7/18

(54) **Verfahren zur Herstellung von gelben Bis (3-(trialkoxysilyl)alkyl)polysulfanen**
Preparation of yellow bis (3-(trialkoxysilyl)alkyl)polysulfanes
Procédé de préparation de bis (3-(trialkoxysilyl)alkyl)polysulfanes jaunes

(30) Priorität: 06.07.2001 DE 10132939
(43) Veröffentlichungstag der Anmeldung: 08.01.2003
(73) Patentinhaber: Degussa AG, 40474 Düsseldorf (DE)
(72) Erfinder: Krafczyk, Roland, Dr., 79618 Rheinfelden (DE); Deschler, Ulrich, Dr., 63877 Sailauf (DE); Treffeisen, BjÖrn, 79194 Gundelfingen (DE)

(56) Entgegenhaltungen:
- EP-A- 0 937 732
- EP-A- 0 949 263
- EP-A- 1 065 211
- EP-A- 1 172 367
- DE-A- 2 141 159
- DE-A- 10 045 269
- DE-C- 10 024 037
- FR-A- 2 384 787
- US-A- 5 859 275
- US-B2- 6 380 413

## Beschreibung

Die Erfindung betrifft ein Verfahren zur Herstellung von gelben Bis(3-[trialkoxysilyl]alkyl)polysulfanen.

Aus DE 21 41 159 ist die Herstellung von Bis(3-[triethoxysilyl]propyl)tetrasulfan durch Umsetzung von Chlorpropyltriethoxysilan mit Natriumpolysulfid (NPS) bekannt. Aus DE 10034493.3 ist die Herstellung von Bis(3-[triethoxysilyl]propyl)disulfan durch Umsetzung von Chlorpropyltriethoxysilan mit Natriumpolysulfid (NPS) und Natriumsulfid (Na₂S) bekannt. Alternativ lassen sich Bis(3-[triethoxysilyl]propyl)polysulfane durch Umsetzung von Chlorpropyltriethoxysilan mit Natriumsulfid (Na₂S) und Schwefel herstellen. Das in den bekannten Verfahren verwendete Chlorpropyltriethoxysilan kann durch Ethanolyse von Chlorpropyltrichlorsilan hergestellt werden. Dabei wird nach bekannten Verfahren, wie in DE 20 61 189 und DE 32 36 628 beschrieben, ein vollständig umgesetztes Produkt mit einem nur sehr geringen Anteil an Chlorpropylmonochlordiethoxysilan erhalten. Dieses vollständig umgesetzte Chlorpropyltriethoxysilan wird im folgenden "neutral" genannt.

Wird das neutrale Chlorpropyltriethoxysilan mit Natriumpolysulfid (NPS, Na₂Sₓ mit x = 2 bis 5 und Gemische daraus) oder Natriumsulfid (Na₂S) und Schwefel oder Natriumpolysulfid (NPS, Na₂Sₓ mit x = 2 bis 5 und Gemische daraus) und Na₂S zur Herstellung von Bis (3-[triethoxysilyl]propyl)polysulfanen nach den oben aufgeführten Verfahren umgesetzt, so wird ein dunkelgelb bis rot gefärbtes Produkt (Iodfarbzahl ≥ 20 mg Iod/100 ml) erhalten. Am Markt eingeführt ist jedoch ein hellgelbes Produkt, das aus neutralem Chlorpropyltriethoxysilan nicht zugänglich ist.

Der Nachteil dieser bekannten Verfahren besteht darin, daß ein Produkt mit dunkelgelber bis roter Farbe erhalten wird.

Um hellgelbe Bis(3-[triethoxysilyl]propyl)polysulfane (Iodfarbzahl ≤ 10 mg Iod/100 ml) zu erhalten, muß im Chlorpropyltriethoxysilan ein sogenannter Restsäuregehalt in Form von Chlorpropylmonochlordiethoxysilan vorhanden sein. Dies kann dadurch erreicht werden, daß die Ethanolysereaktion nicht vollständig zu Ende geführt wird. Diese Maßnahme bedingt in der betrieblichen Praxis jedoch einen nicht unerheblichen Mehraufwand, insbesondere deshalb, weil der Restsäuregehalt in einem sehr engen Bereich gehalten werden muß, die Reaktion also sehr gezielt an einem bestimmten Punkt kurz vor vollständigem Umsatz abgebrochen werden muß.

Auch eine Ansäuerung des neutralen Chlorpropyltriethoxysilans mit alkoholischer Salzsäure vor der Reaktion mit den genannten Schwefelungsagentien führt nicht zu hellgelb gefärbten Bis(3-[triethoxysilyl]propyl)polysulfanen, sondern ebenfalls zu dunkelgelb bis rot gefärbten.

Aus DE 100 24 037.2 und DE 100 45 269.8 ist die Herstellung von hellgelben Bis(3-[triethoxysilyl]propyl)polysulfanen durch Zugabe einer kleinen Menge an Chlorpropyltrichlorsilan oder Chlorpropylmonochlordiethoxysilan oder Chlorpropyldichlormonoethoxysilan zu Chlorpropyltriethoxysilan vor Zugabe der Schwefelungsagenzien bekannt.

Der Nachteil dieses Verfahrens besteht darin, daß Chlorsilane gehandhabt werden müssen, die aufgrund ihrer Eigenschaften aggressive, stark korrosive Verbindungen sind, die in Gegenwart von Feuchtigkeit Salzsäuredämpfe freisetzen.

Aufgabe der Erfindung ist es, ein alternatives Verfahren bereitzustellen, mit dessen Hilfe man ein gelbes Bis(3-[trialkoxysilyl]alkyl)polysulfan erhält, wobei auf den zusätzlichen Einsatz von aggressiven Chlorsilanen verzichtet werden kann.

Gegenstand der Erfindung ist ein Verfahren zur Herstellung von gelben Bis(3-[trialkoxysilyl]alkyl)polysulfanen mit einer Iodfarbzahl von ≤ 10 mg Iod/100 ml, vorzugsweise 5-7 mg Iod/100 ml, welches dadurch gekennzeichnet ist, daß man zu neutralem Chloralkyltrialkoxysilan organische Säure, beispielsweise Ameisensäure, Essigsäure oder Mischungen dieser Säuren, gibt und anschließend mit Natriumpolysulfid (NPS) oder Natriumsulfid (Na₂S) und Schwefel oder Natriumpolysulfid (NPS) und Na₂S in Alkohol umsetzt.

Das Natriumpolysulfid (NPS) kann Na₂Sₓ mit x = 2 bis 5 oder Gemische davon sein.

Vorzugsweise können die Bis(3-[trialkoxysilyl]alkyl)polysulfane, Bis(3-[triethoxysilyl]propyl)polysulfan, Bis(3-[triethoxysilyl]ethyl)polysulfan, Bis(3-[triethoxysilyl]methyl)polysulfan, Bis(3-[trimethoxysilyl]propyl]polysulfan, Bis(3-[trimethoxysilyl]ethyl)polysulfan oder Bis(3-[trimethoxysilyl]methyl)polysulfan sein.

Als Chloralkyltrialkoxysilan kann man Chlorpropyltriethoxysilan, Chlorethyltriethoxysilan, Chlormethyltriethoxysilan, Chlorpropyltrimethoxysilan, Chlorethyltrimethoxysilan oder Chlormethyltrimethoxysilan verwenden. Besonders bevorzugt kann das Chlorpropyltriethoxysilan verwendet werden.

Die erfindungsgemäß herstellbaren gelben (Bis(3-[trialkoxysilyl]alkyl)polysulfane) können ein Polysulfangemisch sein. Die Polysulfankette kann im Mittel 1,5 - 10,0 Schwefel, vorzugsweise 2,0 - 4,0 Schwefel, enthalten.

Die organische Säure kann man in Mengen von 0,1 - 10 Gew.-%, vorzugsweise 0,5 - 5,0 Gew.-%, besonders bevorzugt 1,0 - 5,0 Gew.-%, zugeben.

Als Alkohol kann man Propanol, Ethanol oder Methanol verwenden. Vorzugsweise kann man als Alkohol den aus der Alkoxygruppe abgeleiteten Alkohol verwenden, beispielsweise Ethanol bei Ethoxygruppen.

Die Reaktionsmischung kann man vor Zugabe von Natriumpolysulfid (NPS) oder Natriumsulfid (Na₂S) und Schwefel oder Natriumpolysulfid (NPS) und Na₂S, vorzugsweise auf Temperaturen von 20-90°C, erwärmen.

Die organische Säure, beispielsweise Ameisensäure oder Essigsäure, kann man nach Aufarbeitung nicht mehr im Produkt Bis(3-[trialkoxysilyl]alkyl)polysulfan mittels NMR-Spektroskopie detektieren, so daß davon auszugehen ist, daß keine organische Säure im Produkt zurückbleibt.

Bis(3-[trialkoxysilyl]alkyl)polysulfane, hergestellt nach dem erfindungsgemäßen Verfahren, haben eine Iodfarbzahl von ≤ 10 mg Iod/100 ml.

Das erfindungsgemäße Verfahren hat den Vorteil, daß auf den Einsatz von aggressiven Chlorsilanen verzichtet werden kann. Die für die Herstellung von gelben Bis(3-[trialkoxysilyl]alkyl)polysulfanen erforderliche kleine Menge an organischer Säure kann einfach durch Zugabe von beispielsweise Ameisensäure oder Essigsäure zu neutralem Chlorpropyltriethoxysilan erreicht werden. Die Verwendung von organischen Säuren hat den Vorteil, daß in Gegenwart von Feuchtigkeit keine Salzsäuredämpfe freigesetzt werden.

### Beispiele

### Beispiel 1:

Bei Raumtemperatur werden zu einer Lösung aus 240,8 g Chlorpropyltriethoxysilan (neutral) in 120 ml Ethanol 2,5 g Ameisensäure getropft. Anschließend werden 87,1 g Natriumpolysulfid (NPS, Na₂S₄) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 225,2 g hellgelbes Bis(3-[triethoxysilyl]propyl)polysulfan mit einer Iodfarbzahl von 5-7 mg Iod/100 ml, dessen Identität mittels ¹H-NMR-Spektroskopie bestätigt wird.

### Beispiel 2:

Bei Raumtemperatur werden zu 240,8 g Chlorpropyltriethoxysilan (neutral) in 120 ml Ethanol 2,5 g Ameisensäure getropft. Anschließend werden 18,4 g Schwefel und 44,8 g Natriumsulfid (Na₂S) zugegeben und das Reaktionsgemisch 2 h lang bei 81 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 210,4 hellgelbes Bis(3-[triethoxysilyl]propyl)polysulfan mit einer Iodfarbzahl von 7-10 mg Iod/100 ml, dessen Identität mittels ¹H-NMR-Spektroskopie bestätigt wird.

### Beispiel 3:

Bei Raumtemperatur werden zu einer Lösung aus 240,8 g Chlorpropyltriethoxysilan (neutral) in 120 ml Ethanol 2,5 g Ameisensäure getropft. Anschließend wird 30 Minuten lang bei 82 °C unter Rühren am Rückfluß gekocht. Nach Abkühlen auf 60 °C werden 29,1 g Dinatriumtetrasulfid (Na₂S₄) und 26,0 g Natriumsulfid (Na₂S) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 217,5 g hellgelbes Bis(3-[triethoxysilyl]propyl)polysulfan mit einer Iodfarbzahl von 5-7 mg Iod/100 ml, dessen Identität mittels ¹H-NMR-Spektroskopie bestätigt wird.

### Beispiel 4:

Bei Raumtemperatur werden zu einer Lösung aus 240,8 g Chlorpropyltriethoxysilan (neutral) in 120 ml Ethanol 2,5 g Ameisensäure getropft. Anschließend werden 33,9 g Dinatriumtrisulfid (Na₂S₃) und 20,4 g Natriumsulfid (Na₂S) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 232,4 g hellgelbes Bis(3-[triethoxysilyl]propyl)polysulfan mit einer Iodfarbzahl von 5-7 mg Iod/100 ml, dessen Identität mittels ¹H-NMR-Spektroskopie bestätigt wird.

### Beispiel 5:

Bei Raumtemperatur werden zu einer Lösung aus 240,8 g Chlorpropyltriethoxysilan (neutral) in 120 ml Ethanol 3,3 g Essigsäure getropft. Anschließend werden 87,1 g Natriumpolysulfid (NPS, Na₂S₄) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 225,0 g hellgelbes Bis(3-[triethoxysilyl]propyl)polysulfan mit einer Iodfarbzahl von 5-7 mg Iod/100 ml, dessen Identität mittels ¹H-NMR-Spektroskopie bestätigt wird.

### Beispiel 6 (Vergleichsbeispiel 1):

Bei Raumtemperatur werden zu einer Lösung aus 240,8 g Chlorpropyltriethoxysilan (neutral) in 120 ml Ethanol 87,1 g Natriumpolysulfid zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 255,0 g (94,6%) rotes Bis(3-[triethoxysilyl]propyl)polysulfan mit einer Iodfarbzahl von > 20 mg Iod/100 ml.

### Beispiel 7 (Vergleichsbeispiel 2):

Bei Raumtemperatur werden zu einer Lösung von 240,8 g Chlorpropyltriethoxysilan (neutral) in 120 ml Ethanol 18,4 g Schwefel und 44,8 g Natriumsulfid (Na₂S) zugegeben. Das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 209,8 g rotes Bis(3-[triethoxysilyl]propyl)polysulfan mit einer Iodfarbzahl von ≥ 20 mg Iod/100 ml, dessen Identität mittels ¹H-NMR-Spektroskopie bestätigt wird.

### Beispiel 8 (Vergleichsbeispiel 3):

Bei Raumtemperatur werden zu einer Lösung aus 204,8 g Chlorpropyltriethoxysilan (neutral) in 120 ml Ethanol 29,1 g Dinatriumtetrasulfid (Na₂S₄) und 26,0 g Natriumsulfid (Na₂S) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 217,3 g rotes Bis(3-[triethoxysilyl]propyl)polysulfan mit einer Iodfarbzahl von ≥ 20 mg Iod/100 ml, dessen Identität mittels ¹H-NMR-Spektroskopie bestätigt wird.

### Beispiel 9 (Vergleichsbeispiel 4):

Bei Raumtemperatur werden zu einer Lösung aus 240,8 g Chlorpropyltriethoxysilan (neutral) in 120 ml Ethanol 33,9 g Dinatriumtrisulfid (Na₂S₃) und 20,4 g Natriumsulfid (Na₂S) zugegeben und das Reaktionsgemisch 2 h lang bei 82 °C unter Rühren am Rückfluß gekocht. Nach Abkühlen auf Raumtemperatur wird vom ausgefallenen Natriumchlorid abfiltriert und das Ethanol am Rotationsverdampfer entfernt. Eine nachfolgende Filtration liefert 232,0 g rotes Bis(3-[triethoxysilyl]propyl)polysulfan mit einer Iodfarbzahl von ≥ 20 mg Iod/100 ml, dessen Identität mittels ¹H-NMR-Spektroskopie bestätigt wird.

Die Iodfarbzahl wird nach DIN 6162 bestimmt.

## Patentansprüche

1. Verfahren zur Herstellung von gelben Bis(3-[trialkoxysilyl]alkyl)polysulfanen mit einer Iodfarbzahl von ≤ 10 mg Iod/100 ml, **dadurch gekennzeichnet, daß** man zu neutralem Chloralkyltrialkoxysilan organische Säure gibt und anschließend mit Natriumpolysulfid (NPS) oder Natriumsulfid (Na₂S) und Schwefel oder Natriumpolysulfid (NPS) und Na₂S in Alkohol umsetzt.

2. Verfahren nach Anspruch 1, **dadurch gekennzeichnet, daß** man die organische Säure in einer Menge von 0,1 - 10 Gew.-% zugibt.

3. Verfahren nach Anspruch 1, **dadurch gekennzeichnet, daß** man die Reaktionsmischung vor Zugabe von Natriumpolysulfid (NPS) oder Natriumsulfid (Na₂S) und Schwefel oder Natriumpolysulfid (NPS) und Na₂S, auf Temperaturen von 20-90°C erwärmt.

4. Verfahren nach Anspruch 1, **dadurch gekennzeichnet, daß** es sich bei den gelben Bis(3-[trialkoxylsilyl]alkyl)polysulfanen um Polysulfangemische handelt.

5. Verfahren nach Anspruch 1, **dadurch gekennzeichnet, daß** man als organische Säure Ameisensäure, Essigsäure, oder Mischungen dieser Säuren verwendet.

6. Verfahren nach Anspruch 1, **dadurch gekennzeichnet, daß** man als Chloralkyltrialkoxysilan Chlorpropyltriethoxysilan, Chlorethyltriethoxysilan, Chlormethyltriethoxysilan, Chlorpropyltrimethoxysilan, Chlorethyltrimethoxysilan oder Chlormethyltrimethoxysilan verwendet.

## Claims

1. Process for the production of yellow bis(3-[trialkoxysilyl]alkyl)polysulfanes with an iodine colour index of ≤ 10 mg iodine/100 ml, **characterised in that** organic acid is added to neutral chloroalkyltrialkoxysilane and then reacted with sodium polysulfide (NPS) or sodium sulfide (Na₂S) and sulfur or sodium polysulfide (NPS) and Na₂S in alcohol.

2. Process according to claim 1, **characterised in that** the organic acid is added in an amount of 0.1 - 10 wt.%.

3. Process according to claim 1, **characterised in that** the reaction mixture is heated to temperatures of 20-90°C before addition of sodium polysulfide (NPS) or sodium sulfide (Na₂S) and sulfur or sodium polysulfide (NPS) and Na₂S.

4. Process according to claim 1, **characterised in that** the yellow bis(3-[trialkoxylsilyl]alkyl)polysulfanes are polysulfane mixtures.

5. Process according to claim 1, **characterised in that** formic acid, acetic acid or mixtures of these acids are used as organic acid.

6. Process according to claim 1, **characterised in that** chloropropyltriethoxysilane, chloroethyltriethoxysilane, chloromethyltriethoxysilane, chloropropyltrimethoxysilane, chloroethyltrimethoxysilane or chloromethyltrimethoxysilane is used as chloroalkyltrialkoxysilane.

## Revendications

1. Procédé de préparation de bis(3-[trialkoxysilyl]alkyl)polysulfanes avec une valeur chromatique de l'iode ≤ 10 mg d'iode/100 ml,
**caractérisé en ce que**
l'on ajoute à du chloroalkyltrialkoxysilane neutre un acide organique et ensuite on le met en réaction avec du polysulfure de sodium (NPS) ou du sulfure de sodium (Na₂S) et du soufre ou du polysulfure de sodium (NPS) et du Na₂S dans de l'alcool.

2. Procédé selon la revendication 1,
**caractérisé en ce que**
l'on ajoute l'acide organique en une quantité de 0,1 - 10 % en poids.

3. Procédé selon la revendication 1,
**caractérisé en ce que**
l'on chauffe le mélange réactionnel avant d'ajouter le polysulfure de sodium (NPS) ou le sulfure de sodium (Na₂S) et le soufre ou le polysulfure de sodium (NPS) et Na₂S, à des températures de 20-90°C.

4. Procédé selon la revendication 1,
**caractérisé en ce que**
les bis[3-trialkoxysilyl]alkyl)polysulfanes sont des mélanges de polysulfanes.

5. Procédé selon la revendication 1,
**caractérisé en ce que**
l'on utilise comme acide organique de l'acide formique, de l'acide acétique ou des mélanges de ces acides.

6. Procédé selon la revendication 2,
**caractérisé en ce que**
l'on utilise comme chloroalkyltrialkoxysilane, du chloropropyltriéthoxysilane, du chloroéthyltriéthoxysilane, du chlorométhyltriéthoxysilane, du chloropropyltriméthoxysilane, du chlororéthyltriméthoxysilane ou du chlorométhyltrimethoxysilane.
